# EUROPÄISCHE PATENTSCHRIFT

(11) **EP 0 546 355 B1**
(45) Veröffentlichungstag und Bekanntmachung des Hinweises auf die Patenterteilung: **02.08.1995**
(21) Anmeldenummer: 92119680.4
(22) Anmeldetag: 19.11.1992
(51) Int. Cl.: G01D 5/14

(54) **Sensorkopf für einen Magnetfeldgeber**
Sensor head for magnetic field sensor
Tête de capteur de champ magnétique

(30) Priorität: 07.12.1991 DE 4140403
(43) Veröffentlichungstag der Anmeldung: 16.06.1993
(73) Patentinhaber: Mannesmann Kienzle GmbH, 78052 Villingen-Schwenningen (DE)
(72) Erfinder: Kastler, Ernst, W-7737 Bad-Dürrheim 4 (DE)

(56) Entgegenhaltungen:
- DE-A- 2 241 629
- DE-A- 3 638 622
- DE-A- 3 901 678

## Beschreibung

Die Erfindung betrifft einen Sensorkopf für einen Magnetfeldgeber, mit einem hülsenförmigen Permanentmagneten, welchem ein auf einem mit Leiterbahnen versehenen Träger befestigter Hallgenerator zugeordnet ist, wobei die Achse des Permanentmagneten und die Induktionsachse des Hallgenerators im wesentlichen zusammenfallen,

Magnetfeldgeber, d. h. Geber, bei denen als aktive Elemente Feldplatten oder Hallgeneratoren verwendet sind, weisen im Gegensatz zu Induktionsgebern den Vorzug auf, daß relativ niedrige Drehzahlen bzw. Bewegungen im Stillstandsbereich erfaßt werden können.

Bisherige Lösungen, insbesondere für stabförmige Geberarchitekturen mit einem Permanentmagneten stirnseitig zugeordneten Hallgenerator liefern ein gegenüber dem erzielbaren Nutzsignal relativ hohes und aufgrund der Beschaltung des Hallgenerators temperaturabhängiges Grund- bzw. Störsignal, das, was meßtechnisch in besonderem Maße unbefriedigend ist, bei der weiteren Signalbearbeitung verstärkt wird.

Mit der DE B 36 38 622 ist ein Magnetfeldgeber bekannt geworden, der die technischen Voraussetzungen eines derartigen, stabförmigen Magnetfeldgebers verbessert, insbesondere jedoch ein möglichst hohes Nutz-/Störsignal-Verhältnis liefert. Dieser Magnetfeldgeber sieht als Permanentmagneten einen Ringmagneten bzw. einen hülsenförmigen Magneten vor, dessen Öffnung der Hallgenerator derart zugeordnet ist, daß die Induktionsachse des Hallgenerators und die Achse des Ringmagneten im wesentlichen zusammenfallen und der Hallgenerator bei offenem Magnetkreis in einem durch Feldverdrängung innerhalb des Ringmagneten gegebenen Raum minimaler magnetischer Induktion angeordnet ist. Dabei ergibt sich der Vorteil, daß der aufgrund der sog. ohmschen Nullkomponenten des Hallgenerators fertigungsbedingt bestehende Störspannungspegel kompensierbar ist, indem der Hallgenerator magnetisch vorgespannt wird, d. h. der Hallgenerator gegenüber der Zone minimaler magnetischer Induktion versetzt angeordnet wird.

Dieser Nullpunktabgleich stellt eine außergewöhnlich empfindliche Lagejustierung zwischen dem Permanentmagneten und dem Hallgenerator dar, die in der Serienfertigung erhebliche Schwierigkeiten bereitet. Die in der DE B 36 38 622 beschriebene Lösung, bei der an einer Leiterplatte ein fingerförmiger Ansatz derart ausgebildet ist, daß er in die Öffnung des Permanentmagneten einführbar und der Hallgenerator an der Stirnseite des Leiterplattenansatzes befestigt ist, ist für die Serienfertigung aus verschiedenen Gründen ungeeignet. Insbesondere wird wegen der groben Toleranzen, die bei der Herstellung der Leiterplatte in Kauf genommen werden müssen, und wegen erheblicher, ebenfalls zu tolerierender Formabweichungen derartiger Permanentmagnete eine unangemessen aufwendige Halterung für die Justierung und die Lagefixierung für die nachfolgende feste Verbindung des Permanentmagneten mit dem Leiterplattenansatz erforderlich.

Es war somit die Aufgabe gestellt, für einen Magnetfeldgeber gemäß dem Oberbegriff eine Anordnung zu schaffen, die eine für die Großserienfertigung geeignete Montage sowie eine einfache, gegenseitige Ausrichtung und Lagefixierung von Hallgenerator und Permanentmagnet gestattet.

Die Lösung der Aufgabe ist ausgehend vom Oberbegriff dadurch gekennzeichnet, daß der Träger, bevor er unlösbar mit dem Permanentmagneten verbunden wird, derart spielfrei in die Öffnung des Permanentmagneten einsetzbar ist, daß zum Zwecke der Justierung der Permanentmagnet und der Träger relativ zueinander verschiebbar sind.

Ein bevorzugtes Ausführungsbeispiel sieht vor, daß ein in die Öffnung des Ringmagneten einpreßbares Klemmstück vorgesehen ist und daß an dem Klemmstück eine Öffnung und federnde Backen für die Aufnahme und das Festhalten eines als Leiterplatte ausgebildeten Trägers ausgeformt sind.

Ein weiteres Ausführungsbeispiel zeichnet sich dadurch aus, daß der Träger quaderförmig, vorzugsweise mit rechteckförmigem Querschnitt, ausgebildet ist, daß die Querschnittsdiagonale wenigstens gleich ist dem Innendurchmesser des Permanentmagneten und daß an dem Träger stirnseitig der Kontaktierung des Hallgenerators mit den Leiterbahnen dienende Kontaktflächen ausgebildet sind.

Die vorgeschlagenen Lösungswege gestatten die Schaffung von Sensorköpfen für Magnetfeldgeber gemäß dem Gattungsbegriff, die, was die elektromagnetische Abstimmung anbelangt, für sich, d. h. unabhängig von Gebergehäusen und Steckkontaktkonfigurationen, gegebenenfalls auch ohne die Beschaltung der Geber fertiggestellt werden können und somit universell verwendbar sind. Beide genannten Ausführungsbeispiele zeichnen sich dadurch aus, daß trotz der unumgänglichen, groben Toleranzen der verwendeten Bauteile sozusagen ein Schiebesitz, mit anderen Worten eine verschiebbare Preßpassung, zwischen dem Träger des Hallgenerators und dem Permanentmagneten gegeben ist. Dadurch kann die Vorrichtung für das Zusammenfügen und das notwendige, feinfühlige Justieren der Sensorköpfe besonders einfach gestaltet sein. Für das nachfolgende Fixieren der Funktionsstellung durch Kleben ist bei einer Serienfertigung wegen der gegebenen Selbstsicherung lediglich eine einfache Aufnahme für ein vertikales Aufstellen der Sensorköpfe erforderlich.

Wird gemäß dem einen Ausführungsbeispiel als Träger eine Leiterplatte vorgesehen, so ist es von Vorteil, daß ein derartiger Träger auf eine einfache und gut beherrschbare Weise in der Großserie herstellbar ist und daß an ein und derselben Leiterplatte sowohl der Sensorkopf ausgebildet als auch die elektrischen Bauelemente beispielsweise für den Störschutz und für die Beschaltung des Hallgenerators kontaktierbar sind. Das bei diesem Ausführungsbeispiel zusätzlich erforderliche Klemmstück ist als Kunststoff-Spritzgußteil ebenfalls kostengünstig herstellbar und bietet den Vorzug, daß relativ grobe Toleranzen des Trägers ausgleichbar sind, indem das Klemmstück in ähnlicher Weise wie die Spannzange einer Werkzeugmaschine wirkt.

Bei dem anderen Ausführungsbeispiel, bei dem kein zusätzliches Bauteil erforderlich ist, wird der angestrebte Schiebesitz zwischen dem Permanentmagneten und dem in diesem Falle quaderförmigen Träger durch eine gewisse Elastizität des Trägermaterials und durch eine Formgebung derart, daß beim Zusammenfügen eine Materialverdrängung erfolgt, erzielt. Besonders vorteilhaft ist bei dieser Lösung, daß die dreidimensionale Ausbildung der Leiterbahnen eine ausschließlich stirnseitige Anbringung und Kontaktierung eines vorzugsweise als SMD-Bauteil ausgebildeten Hallgenerators ermöglicht.

Im folgenden sei die Erfindung anhand der Zeichnungen näher erläutert. Es zeigen
Fig. 1 eine Ansicht eines einbaufertigen Magnetfeldgebers mit einem Teilschnitt im Bereich des Sensorkopfes,
Fig. 2 einen Längsschnitt eines an einer auch die Elektronik des Magnetfeldgebers tragenden Leiterplatte ausgebildeten Sensorkopfes,
Fig. 3 A, B bis Fig. 6 A, B Draufsichten und Seitenansichten derjenigen Bauteile, die den Sensorkopf gemäß Fig. 2 bilden,
Fig. 7 A, B zwei Ansichten eines als fertige Baugruppe handhabbaren Sensorkopfes des Leiterplattentyps,
Fig. 8 A, B, C eine Draufsicht, eine Seitenansicht und eine Schnittdarstellung eines quaderförmigen Trägers,
Fig. 9 eine Schnittdarstellung eines Sensorkopfes mit einem Träger gemäß Fig. 8.

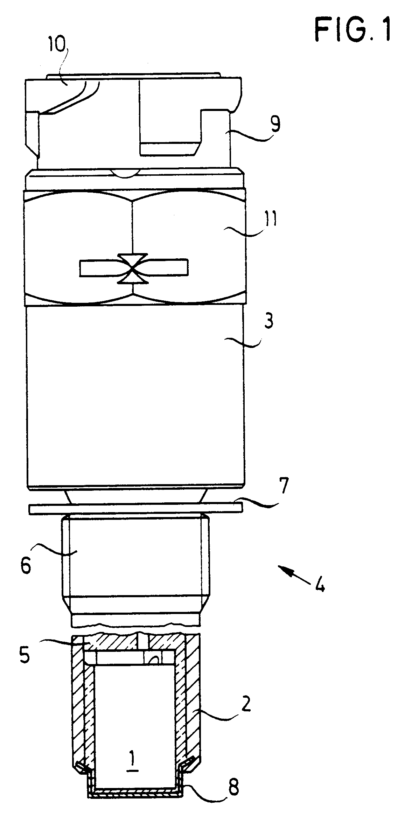

Wie die Fig. 1 zeigt, ist ein Sensorkopf des Leiterplattentyps 1 in den verjüngten Ansatz 2 eines Gehäuses 3 eines Magnetfeldgebers 4 eingeführt und durch eine geeignete Vergußmasse 5 befestigt. Ein an dem Gebergehäuse 3 ausgebildetes Gewinde 6 dient in an sich bekannter Weise dem Befestigen des Magnetfeldgebers 4 beispielsweise am Getriebegehäuse eines Kraftfahrzeuges, und zwar unter Zwischenlage eines am Gebergehäuse 3 unverlierbar gehalterten Ringes 7. Sensorseitig ist das Gebergehäuse 3 durch eine magnetisch nicht leitende Kappe 8 abgeschlossen, während mit 9 ein mit dem Gehäuse 3 verbördelter Steckersockel bezeichnet ist, an welchem Renkverbindungsmittel 10 zur Befestigung einer nicht dargestellten Überwurfmutter ausgebildet sind. Ein an dem Gebergehäuse 3 angeformter Sechskant 11 dient dem Ansetzen eines Werkzeugs beim Befestigen des Magnetfeldgebers 4 am Einbauort.

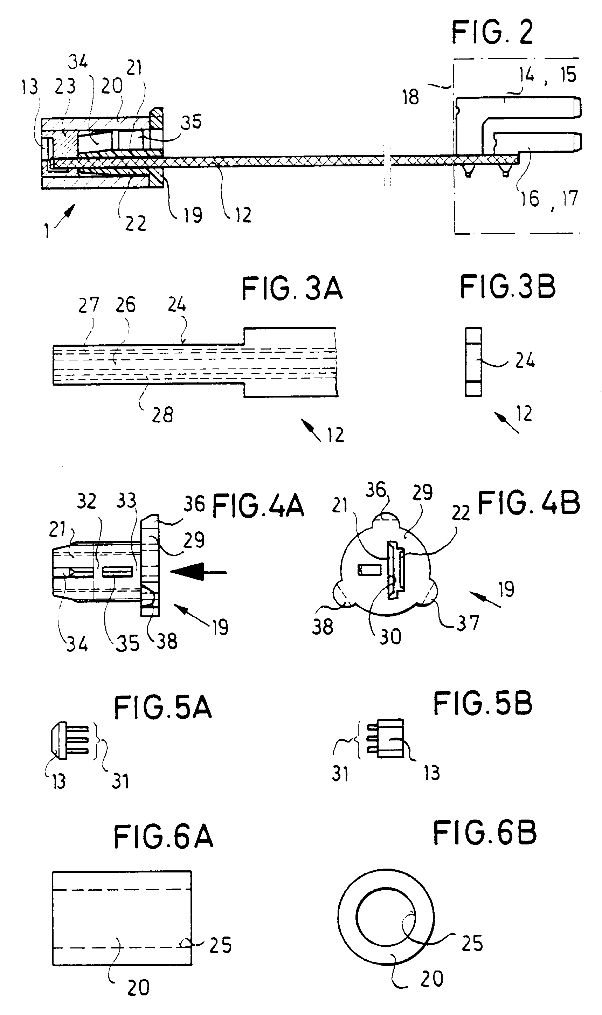

Bei der in Fig. 2 dargestellten Baugruppe bildet eine einzige Leiterplatte sowohl den Träger 12 für den Hallgenerator 13 und die Leiterbahnen des Sensorkopfes 1 als auch für die elektronischen Bauteile des Magnetfeldgebers 4, die, weil nicht erfindungswesentlich, nicht dargestellt sind. Vier als Messerkontakte ausgebildete Geberkontakte sind mit 14, 15 und 16, 17 bezeichnet. Die strichpunktierte Linie 18 soll den Steckersockel 9 umreißen, in welchem die Leiterplatte 12 und die nach außen durchgreifenden Messerkontakte 14, 15 und 16, 17 gehaltert sind. Mit 19 ist ein Klemmstück bezeichnet, welches in den hülsenförmigen Permanentmagneten 20 des Sensorkopfes 1 eingepreßt ist und mittels federnder Backen 21 und 22 den angestrebten Schiebesitz zwischen dem Träger 12 und dem Permanentmagneten 20 bewirkt. Nach dem Justieren wird der Sensorkopf 1 durch eine Klebstoffverbindung 23 fixiert.

Mit der Figurenfolge 3 A, B bis 6, A, B, die jeweils zwei Ansichten der den Sensorkopf 1 bildenden Bauteile darstellen, soll zusätzlich der Montageablauf aufgezeigt werden. Die Fig. 3 A und 3 B zeigen, daß der Träger 12 in Richtung seiner Längsachse gestuft ausgebildet ist, d. h. es ist an dem Träger 12 vorzugsweise symmetrisch zur Längsachse ein fingerförmiger Ansatz 24 vorgesehen, dessen Breite kleiner ist als der Durchmesser der Öffnung 25 des Permanentmagneten 20. Mit 26, 27 und 28 sind die bereits erwähnten, auf dem Träger 12 angebrachten Leiterbahnen bezeichnet.

Bei der Montage des Sensorkopfes 1 wird zunächst das Klemmstück 19, in dessen Flansch 29 eine dem Ansatz 24 entsprechende Öffnung 30 ausgebildet ist, auf den Ansatz 24 aufgeschoben (Fig. 4 B stellt eine Ansicht in Pfeilrichtung in Fig. 4 A dar). Danach wird der in diesem Falle (Fig. 5 A, B) dreipolige, handelsübliche Hallgenerator 13, dessen Kontaktstifte 31 in geeigneter Weise angewinkelt sind, derart mit den Leiterbahnen 26, 27, 28 verbunden, daß der Hallgenerator 13 gemäß Fig. 2 wenigstens zum Teil unmittelbar vor der Stirnfläche des Ansatzes 24 angeordnet ist bzw. die Kontaktstifte 31 den Ansatz 24 stirnseitig umgreifen. Danach wird der Permanentmagnet 20 auf das Klemmstück 19 aufgepreßt, wobei nicht näher bezeichnete, an den Backen 21 und 22 verformbar ausgebildete Grate dem Toleranzausgleich dienen, und die nicht bezeichnete Schulter zwischen dem Ansatz 24 und dem breiteren Bereich des Trägers 12, der in einer Vorrichtung gehaltert sein kann, als Anschlag wirksam ist. Damit ist der Permanentmagnet 20 verschiebbar auf dem Träger 12 angeordnet, und der Sensorkopf 1 kann, indem der Permanentmagnet 20 an und über den Hallgenerator 13 geschoben wird, justiert werden. Hierzu ist der Sensorkopf elektrisch mit einem Differenzverstärker verbunden, dessen Ausgangssignal bei Erreichen des unter Berücksichtigung von Störeinflüssen optimalen Arbeitspunktes im Bereich des Minimums liegt.

Der Vollständigkeit halber sei noch erwähnt, daß die asymmetrische Ausbildung der Backen 21 und 22 des Klemmstücks 19 dazu dient, den Sensorkopf 1 in Bezug zu einem bereits gegebenen Steckersockel 9 zu zentrieren, d. h. es ist ohne weiteres auch eine symmetrische Ausbildung denkbar. Die asymmetrische Ausbildung macht jedoch an der einen Backe 21 durch Dehnfugen 32, 33 freigestellte Distanzlappen 34, 35 erforderlich. Ferner weist das Klemmstück 19 radial angeformte Zentrieransätze 36, 37, 38 auf, die der radialen Ausrichtung des Sensorkopfes 1 beim Einführen in das Gehäuse 3 bzw. in dessen verjüngten Ansatz 2 dienen.

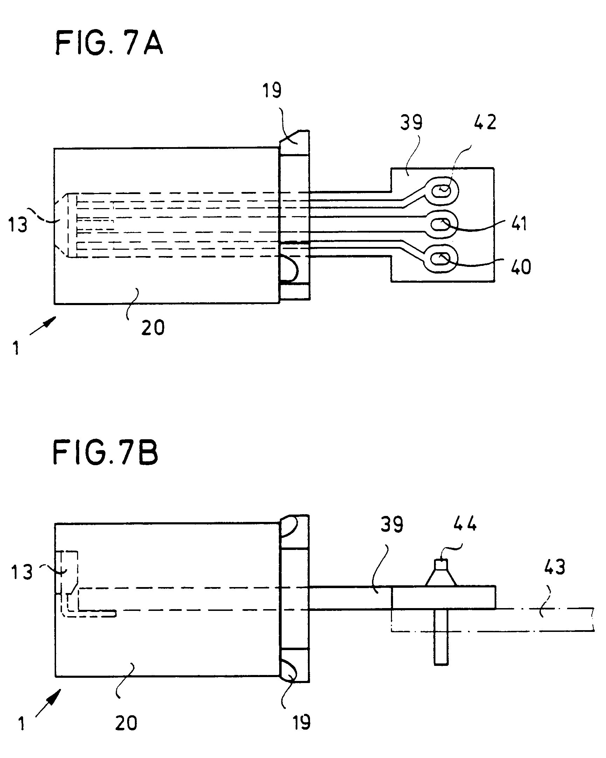

Mit den Fig. 7 A und 7 B sind zwei Ansichten des Sensorkopfes 1 gezeigt, wobei ebenfalls ein Träger 39 in Form einer Leiterplatte vorgesehen ist, auf der jedoch lediglich die im Sensorkopf 1 verlaufenden Leiterbahnen und der Hallgenerator 13 angeordnet sind. Die Leiterbahnen enden mit Kontaktflächen, die jeweils ein in dem Träger vorgesehenes Langloch 40, 41, 42 umgeben. Der Sensorkopf 1 kann auf diese Weise mit einer die elektronischen Bauelemente des betreffenden Magnetfeldgebers tragenden Leiterplatte 43 mechanisch und elektrisch verbunden werden, und zwar unter Verwendung von in der Leiterplatte 43 befestigten Kontaktstiften 44. Dabei besteht im Zusammenwirken mit den Langlöchern 40, 41, 42 vor der endgültigen Verbindung durch Löten eine gewisse Justierbarkeit in Längsrichtung. In gleicher Weise ist auch ein Leiterband verwendbar mit dem Vorzug, daß die Längenjustierung zwischen einer dem Gebersockel zugeordneten Leiterplatte oder ausschließlich den Kontakten des Gebersockels und dem Sensorkopf beim Zusammenbau selbsttätig erfolgt.

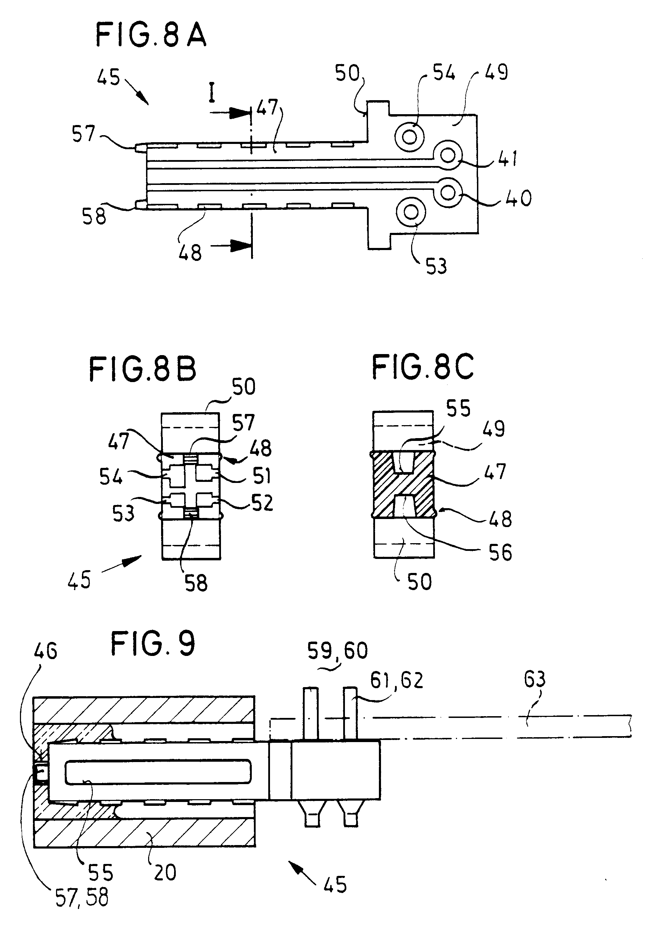

Wie bereits erläutert, ist bei Verwendung eines Trägers 45 gemäß den Fig. 8 A, B, C eine unmittelbare Verbindung mit dem Permanentmagneten 20 und das Anbringen eines Hallgenerators 46 unmittelbar an dessen Stirnseite möglich. Um den für die Justierung erforderlichen Schiebesitz auch bei den gegebenen groben Toleranzen zu gewährleisten und die Flächenpressung gering zu halten, sind an den Kanten des sozusagen als Kern des Sensorkopfes 1 dienenden Ansatzes 47 Verzahnungen - eine Zahnreihe ist mit 48 bezeichnet - ausgebildet, die beim Aufschieben des Permanentmagneten 20 mehr oder weniger deformiert werden. Gleichwertig können auch Einkerbungen in die Kanten des Ansatzes 47 vorgesehen und die Diagonalen des Ansatzquerschnitts größer als der Öffnungsdurchmesser des Permanentmagneten 20 gestaltet werden. Der quaderförmige Träger 45 weist außerdem einen verbreiterten, gestuften Abschnitt 49 auf, so daß sich ebenfalls wie bei dem erstgenannten Ausführungsbeispiel eine Anschlagschulter 50, ausreichend Fläche für ein Durchkontaktieren von in zwei Ebenen liegenden Leiterbahnen 51, 52, 53, 54 und ein nicht näher bezeichneter Ansatz zur Aufnahme des Trägers 45 in einer Vorrichtung ergibt. Das Aufbringen der Leiterbahnen 51, 52, 53, 54 kann im Siebdruckverfahren durch Laserkonturieren oder durch spritzgießtechnisches Anformen des Trägers 45 an eine mit den Leiterbahnen 51, 52, 53, 54 versehene Folie gleichen Materials erfolgen. Aus der Schnittdarstellung Fig. 8 C ist ferner ersichtlich, daß mittels gegenüberliegender Vertiefungen 55 und 56 eine Querschnittsverringerung und somit eine gewisse Federungsfähigkeit des Ansatzes 47 vorgesehen ist. Mit 57 und 58 sind stirnseitig am Ansatz 47 angeformte Vorsprünge bezeichnet, die eine Fassung für den vorgesehenen, ebenfalls handelsüblichen Hallgenerator 46 bilden.

Wie aus der Fig. 9 hervorgeht, kann der mit dem Träger 45 gebildete Sensorkopf 1 in gleicher Weise, d. h. mittels Kontakt- bzw. Kupplungsstiften 59, 60 und 61, 62 beispielsweise mit einer Leiterplatte 63 verbunden werden, wobei für einen Längenausgleich geeignete Langlöcher vorzugsweise in der Leiterplatte 63 ausgebildet sind.

## Patentansprüche

1. Sensorkopf für einen Magnetfeldgeber, mit einem hülsenförmigen mit Öffnung versehenen Permanentmagneten, welchem ein auf einem mit Leiterbahnen versehenen Träger befestigter Hallgenerator zugeordnet ist, wobei die Achse des Permanentmagneten und die Induktionsachse des Hallgenerators im wesentlichen zusammenfallen,
dadurch gekennzeichnet,
daß der Träger(12, 45, 39) , bevor er unlösbar mit dem Permanentmagneten (20) verbunden wird, derart spielfrei in die Öffnung (25) des Permanentmagneten (20) einsetzbar ist, daß zum Zwecke der Justierung der Permanentmagnet (20) und der Träger (12, 45, 39) relativ zueinander verschiebbar sind.

2. Sensorkopf nach Anspruch 1,
dadurch gekennzeichnet,
daß ein in die Öffnung (25) des Ringmagneten (20) einpreßbares Klemmstück (19) vorgesehen ist und daß an dem Klemmstück (19) eine Öffnung (30) und federnde Backen (21, 22) für die Aufnahme und das Festhalten eines als Leiterplatte ausgebildeten Trägers (12, 39) ausgeformt sind.

3. Sensorkopf nach Anspruch 2,
dadurch gekennzeichnet,
daß am Hallgenerator (13) ausgebildete, in eine Richtung weisende Kontaktstifte (31) im wesentlichen rechtwinklig angebogen und derart an der Leiterplatte (12, 39) befestigt sind, daß sie die Leiterplatte (12, 39) stirnseitig umgreifen.

4. Sensorkopf nach Anspruch 1,
dadurch gekennzeichnet,
daß der Träger (45) quaderförmig, vorzugsweise mit rechteckförmigem Querschnitt, ausgebildet ist,
daß die Querschnittsdiagonale wenigstens gleich ist dem Öffnungsdurchmesser des Permanentmagneten (20) und
daß an dem Träger (45) stirnseitig der Kontaktierung des Hallgenerators (46) mit den Leiterbahnen (51, 52, 53, 54) dienende Kontaktflächen ausgebildet sind.

5. Sensorkopf nach Anspruch 4,
dadurch gekennzeichnet,
daß an dem quaderförmigen Träger (45) eine Fassung für eine stirnseitige Halterung eines Hallgenerators (46) ausgebildet ist.

6. Sensorkopf nach Anspruch 4,
dadurch gekennzeichnet,
daß für den quaderförmigen Träger (45) eine die Leiterbahnen (51, 52, 53, 54) tragende Folie Anwendung findet und
daß der Träger (45) spritzgußtechnisch an der Folie angeformt ist.

7. Sensorkopf nach Anspruch 4,
dadurch gekennzeichnet,
daß an den mit der Wand der Öffnung (25) des Permanentmagneten (20) in Wirkverbindung tretenden Kanten des quaderförmigen Trägers (45) Verzahnungen (48) ausgeformt sind.

8. Sensorkopf nach Anspruch 6,
dadurch gekennzeichnet,
daß die Leiterbahnfolie länger ist als der Sensorkopf (1) und
daß das freie Ende der Leiterbahnfolie für ein mechanisches und elektrisches Verbinden mit einer die elektrischen Bauteile des Magnetfeldgebers (4) tragenden Leiterplatte ausgebildet ist.

9. Sensorkopf nach Anspruch 1,
dadurch gekennzeichnet,
daß der Träger (12, 45, 39) in Richtung der Längsachse gestuft ausgebildet ist und
daß in dem gegenüber dem mit dem Ringmagneten (20) verbindbaren, fingerförmigen Ansatz verbreiterten Abschnitt des Trägers (39) am Ende jeder Leiterbahn ein von dieser kontaktiertes Langloch (40, 41, 42) ausgebildet ist.

10. Sensorkopf nach Anspruch 2,
dadurch gekennzeichnet,
daß der Träger (12) unmittelbar an einer die elektrischen Bauelemente des Magnetfeldgebers (4) tragenden Leiterplatte ausgebildet ist.

## Claims

1. A sensor head for a magnetic field transmitter, having a sleeve-shaped permanent magnet which is provided with an opening and with which there is associated a Hall effect generator secured to a carrier provided with conductor tracks, where the axis of the permanent magnet and the induction axis of the Hall effect generator substantially coincide, characterized in that before the carrier (12, 45, 39) is connected non-detachably to the permanent magnet (20), it can be inserted without play into the opening (25) of the permanent magnet (20) such that the permanent magnet (20) and the carrier (12, 45, 39) are displaceable relative to one another for the purpose of adjustment.

2. A sensor head according to Claim 1, characterized in that a clamping piece (19) which can be pressed into the opening (25) of the annular magnet (20) is provided, and in that an opening (30) and resilient jaws (21, 22) for receiving and fixing a carrier (12, 39) constructed as a printed circuit board are shaped in the clamping piece (19).

3. A sensor head according to Claim 2, characterized in that contact pins (31) which are constructed on the Hall effect generator (13) and point in a direction are bent substantially at right angles and are secured to the printed circuit board (12, 39) such that they reach around the end face of the printed circuit board (12, 39).

4. A sensor head according to Claim 1, characterized in that the carrier (45) is constructed to be cuboidal, preferably with a rectangular cross-section, in that the cross-sectional diagonal is at least equal to the diameter of the opening of the permanent magnet (20), and in that contact faces serving to bring the Hall effect generator (46) into contact with the conductor tracks (51, 52, 53, 54) are constructed on the end side of the carrier (45).

5. A sensor head according to Claim 4, characterized in that a holder for an end-side mounting of a Hall effect generator (46) is constructed on the cuboidal carrier (45).

6. A sensor head according to Claim 4, characterized in that a film carrying the conductor tracks (51, 52, 53, 54) is used for the cuboidal carrier (45), and in that the carrier (45) is moulded to the film by the injection moulding technique.

7. A sensor head according to Claim 4, characterized in that toothings (48) are made on the edges of the cuboidal carrier (45) which come into operative contact with the wall of the opening (25) of the permanent magnet (20).

8. A sensor head according to Claim 6, characterized in that the conductor track film is longer than the sensor head (1), and in that the free end of the conductor track film is constructed for a mechanical and electrical connection to a printed circuit board carrying the electrical components of the magnetic field transmitter (4).

9. A sensor head according to Claim 1, characterized in that the carrier (12, 45, 39) is constructed to be stepped in the direction of the longitudinal axis, and in that there is constructed in the section of the carrier (39) widened by comparison with the finger-shaped projection which can be connected to the annular magnet (20), at the end of each conductor track, an elongate hole (40, 41, 42) which is contacted by the latter.

10. A sensor head according to Claim 2, characterized in that the carrier (12) is constructed directly on a printed circuit board carrying the electrical components of the magnetic field transmitter (4).

## Revendications

1. Tête de capteur pour un générateur de champ magnétique, avec un aimant permanent en forme de douille pourvu d'une ouverture, auquel est associé un générateur de Hall fixé sur un support équipé de bandes conductrices, l'axe de l'aimant permanent coïncidant, pour l'essentiel, avec l'axe d'induction du générateur de Hall,
caractérisée par le fait
que le support (12, 45, 39), avant d'être irréversiblement assemblé avec l'aimant permanent (20), peut être introduit sans jeu dans l'ouverture (25) dudit aimant permanent (20) de telle sorte que, aux fins de l'ajustage, l'aimant permanent (20) et le support (12, 45, 39) soient déplaçables relativement l'un par rapport à l'autre.

2. Tête de capteur selon la revendication 1,
caractérisée par le fait
qu'il est prévu une pièce de serrage (19) pouvant être pressée dans l'ouverture (25) de l'aimant annulaire (20) et,
que sur ladite pièce de serrage (19) sont formées une ouverture (30) et des mâchoires élastiques (21, 22) permettant de loger et de retenir un support (12, 39) réalisé sous forme de platine à circuits imprimés.

3. Tête de capteur selon la revendication 2,
caractérisée par le fait
que des broches de contact (31) formées sur le générateur de Hall (13) et dirigées dans une même direction sont, pour l'essentiel, coudées en angle droit et fixées sur la platine à circuits imprimés (12, 39) de telle sorte qu'elles enserrent ladite platine à circuits imprimés (12, 39) du côté frontal.

4. Tête de capteur selon la revendication 1,
caractérisée par le fait
que le support (45) est réalisé sous une forme parallélépipédique, de préférence avec une section rectangulaire,
que la diagonale de la section est au moins égale au diamètre d'ouverture de l'aimant permanent (20) et
que sur la face frontale du support (45) sont formées des surfaces de contact servant à la mise en contact du générateur de Hall (46) avec les bandes conductrices (51, 52, 53, 54).

5. Tête de capteur selon la revendication 4,
caractérisée par le fait
que sur le support parallélépipédique (45) est formée une monture pour une fixation frontale d'un générateur de Hall (46).

6. Tête de capteur selon la revendication 4,
caractérisée par le fait
que pour le support parallélépipédique (45) est utilisée une feuille portant les bandes conductrices (51, 52, 53, 54) et que le support (45) est formé sur la feuille par la technique de moulage par injection.

7. Tête de capteur selon la revendication 4,
caractérisée par le fait
que sur les arêtes du support parallélépipédique (45) entrant en coopération avec la paroi de l'ouverture (25) de l'aimant permanent (20) sont formées des dentures (48).

8. Tête de capteur selon la revendication 6,
caractérisée par le fait
que la feuille à bandes conductrices est plus longue que la tête de capteur (1)
et
que l'extrémité libre de la feuille à bandes conductrices est réalisée de manière à permettre une liaison mécanique et électrique avec une platine à circuits imprimés portant les composants électriques du générateur de champ magnétique (4).

9. Tête de capteur selon la revendication 1,
caractérisée par le fait
que le support (12, 45, 39) présente une forme graduée dans le sens de l'axe longitudinal et
que dans le segment du support (39), élargi par rapport à la saillie de forme digitale et pouvant être assemblée avec l'aimant annulaire (20), est formé, à l'extrémité de chaque bande conductrice, un trou oblong (40, 41, 42) mis en contact avec celle-ci.

10. Tête de capteur selon la revendication 2,
caractérisée par le fait
que le support (12) est directement formé sur une platine à circuits imprimés portant les composants électriques du générateur de champ magnétique (4).
